# EUROPÄISCHE PATENTSCHRIFT

(11) **EP 2 944 511 B1**
(45) Veröffentlichungstag und Bekanntmachung des Hinweises auf die Patenterteilung: **05.10.2016**
(21) Anmeldenummer: 15159665.7
(22) Anmeldetag: 18.03.2015
(51) Int. Cl.: B60P 1/00

(54) **LADERAUMAUFBAU MIT EINER VERSCHIEBBAREN WAND UND FAHRZEUG MIT EINEM SOLCHEN LADERAUMAUFBAU**
STORAGE COMPARTMENT BODY COMPRISING A SLIDING WALL AND VEHICLE COMPRISING SUCH A STORAGE COMPARTMENT BODY
STRUCTURE DE COFFRE DOTÉE D'UNE PAROI COULISSANTE ET VÉHICULE DOTÉ D'UNE TELLE STRUCTURE DE COFFRE

(30) Priorität: 16.05.2014 DE 202014102305 U
(43) Veröffentlichungstag der Anmeldung: 18.11.2015
(73) Patentinhaber: Fliegl sen., Josef, 84556 Kastl (DE)
(72) Erfinder: Fliegl sen., Josef, 84556 Kastl (DE)
(74) Vertreter: Tetzner, Michael

(56) Entgegenhaltungen:
- DE-U1-202004 009 744
- JP-U- S6 060 332
- JP-Y2- S5 930 762
- US-A- 2 298 982

## Beschreibung

Die Erfindung betrifft einen Laderaumaufbau mit einer verschiebbaren Wand sowie ein Fahrzeug mit einem solchen Laderaumaufbau.

Das Verschieben der Wand bei einem derartigen Laderaumaufbau dient dazu, den auf einer Seite von der Wand begrenzten Laderaum temporär zu verkleinern, um entweder in dem Laderaum gelagerte Ladung über eine in der Regel der verschiebbaren Wand gegenüberliegende Entladeöffnung zu entladen oder um bei vollumfänglich geschlossenem Laderaum die Ladung zu verdichten.

Ein Fahrzeug in Form eines Anhängers mit einem gattungsgemäßen Laderaumaufbau ist aus der DE 20 2004 009 744 U1 bekannt. Dort wird der nach oben offene Laderaum von einem Laderaumboden, einer beweglichen Stirnwand, einer durch Hochklappen zu öffnenden Rückwand sowie von zwei Seitenwänden begrenzt. Der Laderaumboden wird teilweise von einem unbeweglich in den Laderaumaufbau integrierten Hauptboden sowie von einem Schiebeboden ausgebildet, dessen Länge (in Richtung der Verschiebbarkeit Stirnwand) in etwa der Hälfte des größten Abstands zwischen der verschiebbaren Stirnwand und der Rückwand beträgt und die mittels eines Antriebs in Form eines Hydraulikzylinders verschiebbar ist. Ein Verschieben der Stirnwand relativ zu der Rückwand beziehungsweise relativ zu der von der Rückwand freigebbaren Entladeöffnung erfolgt durch ein Verschieben des Schiebebodens mit der Stirnwand auf dem Hauptboden und/oder einem Verschieben der Stirnwand auf dem Schiebeboden, wobei für ein weitestmögliches Verschieben der Stirnwand in Richtung der Entladeöffnung sowohl der Schiebeboden auf dem Hauptboden als auch die Stirnwand auf dem Schiebeboden verschoben werden muss.

Für das Verschieben der Stirnwand auf den Schiebeboden ist ein auf der dem Laderaum abgewandten Seite mit der Stirnwand verbundener und folglich mit dieser mitbewegter Antrieb vorgesehen. Dieser wirkt mit einem Zugmittel in Form einer Kette zusammen, die in einem von dem Schiebeboden ausgebildeten Kanal auf der dem Laderaum abgewandeten Seite des Schiebebodens entlang der Bewegungsrichtungen der Stirnwand verläuft. Der die Kette aufnehmende Kanal ist mit einer entlang seiner Längsrichtung verlaufenden Öffnung versehen, durch die der jeweilige Abschnitt der Kette, der in Abhängigkeit von der Relativposition der Stirnwand auf dem Schiebeboden über mehrere Umlenkzahnräder des Antriebs geführt ist, aus dem Kanal herausgeführt ist.

Ein Gurtband dient dazu, die Öffnung des Kanals abzudecken, um ein Eindringen von in dem Laderaum gelagerter Ladung zu vermeiden. Dazu liegt das Gurtband in denjenigen Abschnitten des Kanals, in denen die Kette innerhalb des Kanals geführt ist, auf diesem auf und verschließt die Öffnung entsprechend. Im Bereich des Antriebs dagegen, in dem die Kette aus dem Kanal herausgeführt ist, wird das Gurtband über eine Rollonanordnung von dem Kanal abgehoben und über die Umlenkzahnräder des Antriebs geführt. Um ein sicheres Aufliegen des in sich instabilen Gurtbands auf dem Kanal sicherzustellen, ist eine Spannvorrichtung für das Gurtband vorgesehen.

Die Abdichtung der Öffnung des Kanals mittels des Gurtbands weist eine Reihe von Nachteilen auf. Zum einen ist ein kostengünstig herstellbares Gurtband relativ verschleißanfällig, so dass dieses in Abhängigkeit von der in dem Laderaum auf das Gurtband einwirkenden Ladung relativ häufig ausgetauscht werden muss. Dies erhöht den Wartungsaufwand für das Fahrzeug. Weiterhin ist auch der konstruktive Aufwand für diese Art der Abdeckung der Öffnung des Kanals relativ groß, was insbesondere auf die notwendige Spannvorrichtung für das Gurtband zurückzuführen ist.

Ausgehend von diesem Stand der Technik hat der Erfindung daher die Aufgabe zugrunde gelegen, den aus der DE 20 2004 009 744 U1 bekannten Laderaumaufbau insbesondere hinsichtlich des Wartungsaufwands und/oder des konstruktiven Aufwands zu verbessern.

Diese Aufgabe wird mittels eines Laderaumaufbaus gemäß dem Anspruch 1 gelöst. Ein einen erfindungsgemäßen Laderaumaufbau umfassendes Fahrzeug ist Gegenstand des Anspruchs 14. Vorteilhafte Ausgestaltungen des erfindungsgemäßen Laderaumaufbaus und damit des erfindungsgemäßen Fahrzeugs sind Gegenstand der weiteren Ansprüche und ergeben sich aus der nachfolgenden Beschreibung der Erfindung.

Der Erfindung liegt der Gedanke zugrunde, das verschleißanfällige und infolge seiner Instabilität eine Spannvorrichtung erfordernde Gurtband durch eine stabile aber elastisch deformierbare Abdeckung zu ersetzen, die für ein sicheres Abdecken der Kanalöffnung keine Spannvorrichtung erfordert, durch die elastische Deformierbarkeit aber weiterhin ein lokales Abheben von dem Boden des Laderaumaufbaus ermöglicht.

Dementsprechend ist ein gattungsgemäßer Laderaumaufbau, der zumindest einen Boden und eine entlang des Bodens verschiebbare Wand umfasst, wobei unterhalb der der Wand zugewandten Oberfläche des Bodens ein Antriebsschlitten angeordnet ist, der über eine in dem Boden ausgebildete Führungsöffnung mit der Stirnwand verbunden ist, erfindungsgemäß dadurch gekennzeichnet, dass die Führungsöffnung mittels einer auf dem Boden aufliegenden, elastisch deformierbaren Abdeckung verdeckt ist, wobei die Abdeckung im Bereich des Antriebsschlittens unter elastischer Deformation von dem Boden abgehoben ist.

Der von dem Laderaumaufbau ausgebildete Laderaum wird vorzugsweise durch die verschiebbare Wand und weitere Wände begrenzt. Besonders bevorzugt ist eine vollumfänglich Begrenzung durch Wände vorgesehen, wobei weiterhin bevorzugt zumindest eine der Wände, insbesondere diejenige, die der verschiebbaren Wand gegenüber liegt, geöffnet werden kann, um eine Entladeöffnung freizugeben. Vorzugsweise handelt es sich bei der verschiebbaren Wand um eine in Fahrtrichtung eines mit dem Laderaumaufbau versehenen Fahrzeugs hinten oder (besonders bevorzugt) vorne gelegene Stirnwand. Es besteht aber auch die grundsätzliche Möglichkeit zumindest eine der Seitenwände als verschiebbare Wand auszubilden.

Ein erfmdungsgemäßes Fahrzeug umfasst zumindest ein Fahrgestell, insbesondere ein radbasiertes Fahrgestell, und einen auf dem Fahrgestell angeordneten erfindungsgemäßen Laderaumaufbau. Bei dem Fahrzeug kann es sich insbesondere um einen Anhänger handeln. Eine Ausgestaltung in Form eines Kraftfahrzeugs ist aber ebenfalls möglich.

Eine geeignete Abdeckung für einen erfindungsgemäßen Laderaumaufbau kann kostengünstig aus einem Metallblech, insbesondere einem Stahlblech, ausgebildet sein. Eine solche Abdeckung zeichnet sich auch durch eine relativ gute Verschleißfestigkeit aus.

Das lokale Abheben der Abdeckung von dem Boden kann in konstruktiv einfacher Weise durch einen Kontakt mit dem Antriebsschlitten selbst realisiert werden. Um eine dabei auftretende Reibung gering zu halten, kann der Antriebsschlitten eine oder mehrere Rollen aufweisen, die sich im das Abheben bewirkenden Kontakt mit der Abdeckung befinden.

Um zu vermeiden, dass die Abdeckung innerhalb des von einer Seite der Stirnwand begrenzten Laderaums von dem Boden abgehoben wird, kann in einer weiterhin bevorzugten Ausgestaltung des erfindungsgemäßen Laderaumaufbaus vorgesehen sei, dass der Antriebsschlitten außerhalb der Bodenfläche des Laderaums angeordnet ist. Ein lokales Abheben der Abdeckung von dem Boden des Laderaumaufbau erfolgt dadurch immer außerhalb des Laderaums, dessen Größe infolge einer Verschiebung der verschiebbaren Wand veränderbar ist.

Für ein Verschieben der Wand kann vorzugsweise vorgesehen sein, dass der Antriebsschlitten mittels eines Zugmitteltriebs bewegt und folglich in eine solche integriert ist. Dazu kann ein Zugmitteltrieb mit einem selbst geschlossenen umlaufenden Zugmittel vorgesehen sein, wobei der Antriebsschlitten mit einem Abschnitt des Zugmittels fest verbunden ist. Vorzugsweise ist jedoch vorgesehen, dass das Zugmittel offen und somit mit zwei Enden ausgebildet ist, wobei der Antriebsschlitten mit beiden Enden des Zugmittels verbunden ist. Diese Ausgestaltung kann insbesondere eine konstruktiv vorteilhafte Integration einer Spannvorrichtung für das Zugmittel ermöglichen, die dazu zwischen dem Antriebsschlitten und zumindest einem der Enden des Zugmittels angeordnet ist. Eine solche Spannvorrichtung kann besonders vorteilhaft als einfaches Federelement, insbesondere Schraubenfeder ausgebildet sein, die zwischen dem entsprechenden Ende des Zugmittels und dem Antriebsschlitten vorgespannt abgestützt ist.

In Abhängigkeit von der Wahl des Materials für die Abdeckung kann der Umfang, in dem diese elastisch deformierbar ist, begrenzt sein. Vorzugsweise ist daher bei dem erfindungsgemäßen Laderaumaufbau vorgesehen, dass der Zugmitteltrieb einen statisch in den Laderaumaufbau integrierten und folglich nicht mit der Stirnwand mitbewegten Antriebsmotor, der beispielsweise elektrisch, hydraulisch oder pneumatisch wirkend ausgebildet sein kann, umfasst. Dadurch kann - anders als bei dem aus der DE 20 2004 009 744 U1 bekannten Laderaumaufbau - vermieden werden, dass die Abdeckung über zumindest ein relativ großes Antriebsrad geführt und daher entsprechend weit von dem Boden abgehoben werden muss. Weiterhin kann die statische Integration des Antriebsmotors noch den Vorteil aufweisen, dass die Masse der zu verschiebenden Wand und damit die für das Verschieben erforderliche Antriebsleistung gering gehalten wird. Und schließlich entfällt die Notwendigkeit, Versorgungsleitungen, über die der Antriebsmotor mit Energie versorgt wird, derart auszubilden, dass diese ein Mitbewegen des Antriebsmotors mit der Stirnwand zulassen. Dadurch wird der konstruktive Aufwand für den Laderaumaufbau gering gehalten.

In einer weiterhin bevorzugten Ausgestaltung des erfindungsgemäßen Laderaumaufbau kann vorgesehen sein, dass der Zugmitteltrieb einen mit dem Antriebsmotor zusammenwirkenden Kettenabschnitt sowie einen Seilabschnitt aufweist. Diese Ausgestaltung des Zugmittels wird dadurch ermöglicht, dass für ein Hin-und-her-Verschieben des Zugmittels bei entsprechender Auslegung des Zugmitteltriebs kein vollständiger Umlauf des Zugmittels erforderlich ist, so dass die Ausbildung des Zugmittels als mit dem Antriebsmotor zusammenwirkende Kette auf denjenigen Abschnitt beschränkt werden kann, der auch tatsächlich bei den möglichen Bewegungen der verschiebbaren Wand über den Antriebsmotor und insbesondere ein Antriebsritzel des Antriebsmotor geführt wird. Der oder die anderen Abschnitte des Zugmittels können dagegen als einfaches Seil ausgeführt sein, was eine kostengünstige Konstruktion darstellen kann, die sich zudem durch ein geringes Gewicht und gegebenenfalls auch verringerte Betriebsgeräusche auszeichnen kann.

Bei einer solchen Ausgestaltung des Zugmitteltriebs kann insbesondere auch noch vorgesehen sein, dass der Kettenabschnitt über ein insbesondere als Antriebsritzel dienendes Umlenkzahnrad und der Seilabschnitt über eine Umlenkrolle geführt ist, um, gegebenenfalls durch die Integration des Antriebsschlittens, einen geschlossenen Umlauf des Zugmittels auszubilden.

In einer weiterhin bevorzugten Ausgestaltung des erfindungsgemäßen Laderaumaufbaus kann noch vorgesehen sein, dass der Antriebsschlitten innerhalb eines von dem Boden ausgebildeten, sich in den Laderaum erstreckenden (und somit von einer Hauptfläche des Bodens abgesetzt ausgebildeten) Kanals angeordnet ist. Besonders bevorzugt kann in diesem Kanal auch der Zugmitteltrieb ganz oder teilweise angeordnet sein. Dadurch kann vermieden werden, dass für den Antrieb der verschiebbaren Wand unterhalb des Bodens ein großer Bauraum vorgehalten werden muss. Der sich in den Laderaum erstreckende Kanal verringert dabei zwar das Ladevolumen des Laderaums, was jedoch in einem nur verhältnismäßig geringen Umfang erfolgt und daher vernachlässigbar sein kann.

Andererseits kann durch den sich in den Laderaum erstreckenden Kanal auch noch eine Führungsfunktion für die Verschiebebewegung der Wand realisiert werden, wozu vorgesehen sein, kann, dass der Kanal in eine an einer Seite offene Schlitzöffnung der Stirnwand eingreift.

In einer weiterhin bevorzugten Ausgestaltung des erfindungsgemäßen Laderaumaufbau kann zudem vorgesehen sein, dass die Stirnwand mittels einer Rolle, die in Bewegungsrichtung beabstandet von dem Antriebsschlitten angeordnet ist, auf der Abdeckung abrollt. Mittels dieser Rolle kann grundsätzlich die mit der Verschiebebewegung verbundene Reibung gering gehalten werden. Zudem kann dadurch, dass diese auf der Abdeckung abrollt, erreicht werden, dass ein Abheben der Abdeckung lokal begrenzt bleibt und somit spätestens an der Rolle endet. Dadurch kann insbesondere sichergestellt werden, dass die Abdeckung im Bereich des Laderaums auf dem Boden aufliegt und folglich ein Eindringen von Ladung in die Führungsöffnung verhindert wird. Demnach ist bevorzugt vorgesehen, dass eine solche Rolle zumindest zwischen dem Antriebsschlitten und dem Laderaum angeordnet ist. Besonders bevorzugt sind mindestens zwei solcher Rollen vorgesehen, von denen mindestens eine auf beiden Seiten (bezüglich der durch die Verschiebbarkeit der Wand definierten Richtung) des Antriebsschlittens angeordnet ist.

Die Erfindung wird nachfolgend anhand eines in den Zeichnungen dargestellten Ausführungsbeispiels näher erläutert. In den Zeichnungen zeigt:
- Fig. 1:: einen erfindungsgemäßen Laderaumaufbau in einer Aufsicht;
- Fig. 2:: einen Längsschnitt durch den Laderaumaufbau entlang der Schnittebene II - II in der Fig. 1;
- Fig. 3:: einen Längsschnitt durch den Laderaumaufbau entlang der Schnittebene III - III in der Fig. 1;
- Fig. 4:: den in der Fig. 1 mit IV gekennzeichneten Ausschnitt in vergrößerter Darstellung;
- Fig. 5:: den in der Fig. 2 mit V gekennzeichneten Ausschnitt in vergrößerter Darstellung;
- Fig. 6:: einen Querschnitt durch den in der Fig. 5 dargstellten Teil des Laderaumaufbaus entlang der Schnittebene VI - VI in vereinfachter Darstellung;
- Fig. 7:: einen Querschnitt durch den in der Fig. 5 dargstellten Teil des Laderaumaufbaus entlang der Schnittebene VII - VII in vereinfachter Darstellung; und
- Fig. 8:: eine alternative Ausgestaltung einer Abdichtung für die bewegliche Stirnwand des Laderaumaufbaus gemäß den Fig. 1 bis 7.

Der in den Zeichnungen dargestellte Laderaumaufbau umfasst einen Boden 1, sowie sich randseitig an den Boden 1 anschließende Wände, die den nach oben offenen Laderaum begrenzen. In einer Längsrichtung des Laderaumaufbaus gesehen ist eine vordere Stirnwand 2 verschiebbar ausgeführt, während eine Rückwand 3 um Drehgelenke 4 nach oben abklappbar ausgeführt ist, um eine Entladeöffnung freizugeben. Weiterhin sind noch zwei feststehende Seitenwände 5 vorgesehen.

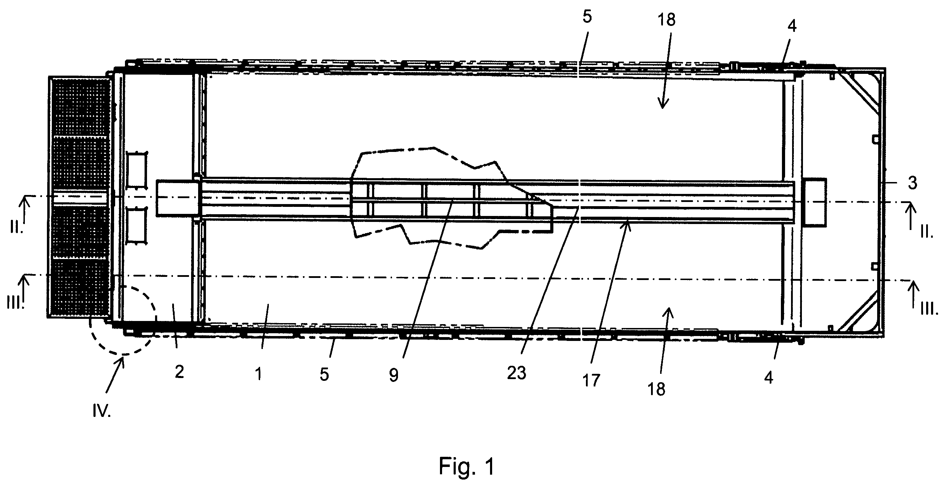

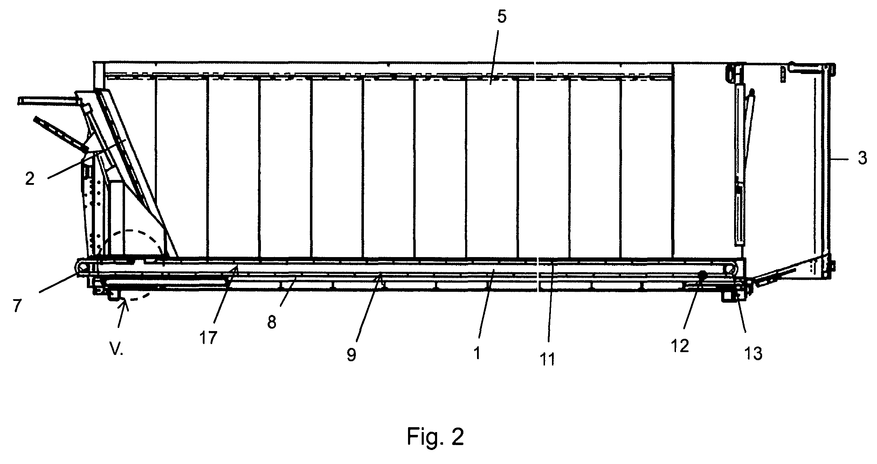

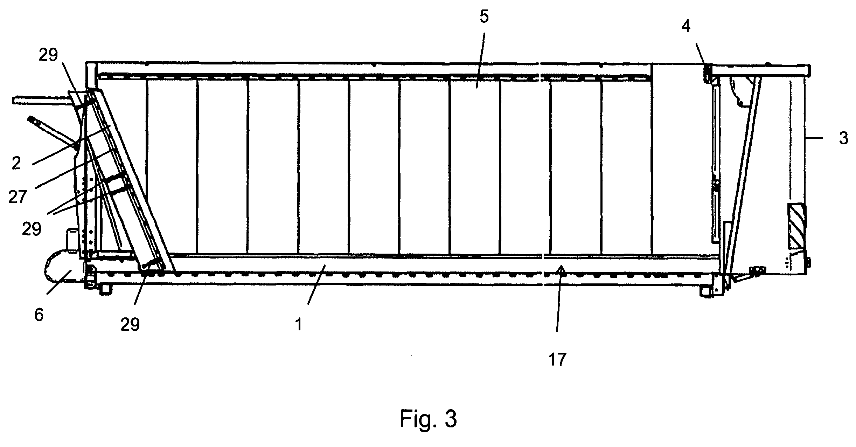

Die Stirnwand 2 ist auf dem Boden 1 entlang der Längsrichtung des Laderaumaufbaus verschiebbar ausgeführt, wodurch das Volumen des Laderaums verändert werden kann. Dies kann dazu genutzt werden, eine im Laderaum gelagerte Ladung bei geöffneter Rückwand 3 über die Entladeöffnung zu entladen, was im Vergleich mit bekannten Kippmulden relativ konstanz erfolgen kann, oder die Ladung wird durch ein Verschieben der Stirnwand 2 verdichtet, was insbesondere bei geschlossener Rückwand 3 vorgesehen sein kann. Die Fig. 1 bis 3 zeigen die Stirnwand 2 in einer Stellung, in der diese weitestmöglich von der Rückwand 3 entfernt positioniert ist. In dieser Stellung begrenzt diese den maximalen Laderaum des Laderaumaufbaus.

Zum Verschieben der Stirnwand 2 ist ein Antrieb vorgesehen. Dieser umfasst einen am vorderen Ende des Laderaumaufbaus angeordneten, beispielsweise hydraulisch wirkenden Antriebsmotor 6, dessen Abtriebswelle 7 ein Antriebsritzel trägt, das mit einem Kettenabschnitt 8 eines Zugmittels 9 eines Zugmitteltriebs zusammenwirkt, indem Zähne des Antriebsritzels in von der Kette ausgebildete Öffnungen eingreifen und folglich eine formschlüssige Verbindung ausgebildet wird, durch die die Antriebsleistung von dem Antriebsmotor 6 auf das Zugmittel 9 übertragen werden kann. Das Antriebsritzel dient gleichzeitig als Umlenkzahnrad für das Zugmittel 9.

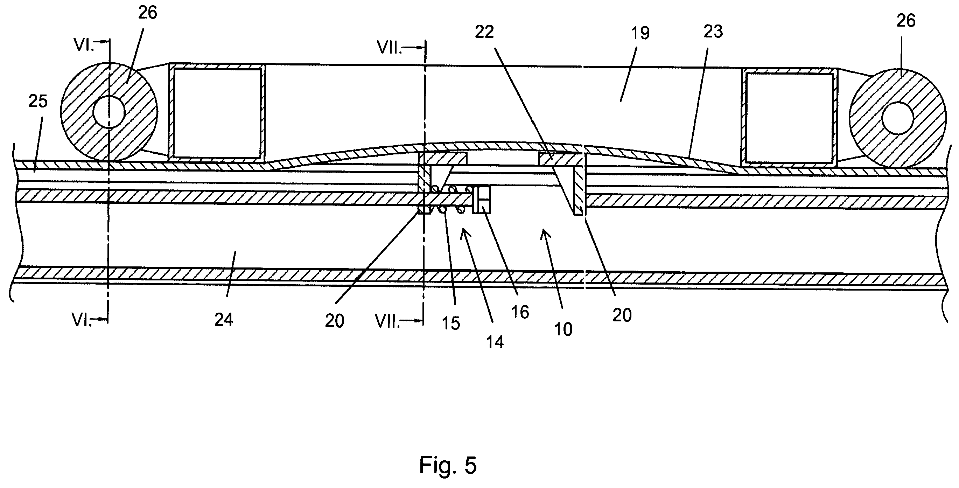

Das Zugmittel 9 ist offen und somit nicht selbst geschlossen umlaufend ausgebildet. Demnach weist dieses zwei Enden auf, die jeweils an einem Antriebsschlitten 10 befestigt sind (vgl. Fig. 5). Dabei ist ein erstes, von dem Kettenabschnitt 8 des Zugmittels 9 ausgebildetes Ende mit dem einen Ende (bezogen auf die Längsrichtung des Laderaumaufbaus) des Antriebsschlittens 10 und das zweite Ende des Zugmittels 9 mit dem entsprechend anderen Ende (bezogen auf die Längsrichtung des Laderaumaufbaus) des Antriebsschlittens 10 verbunden. Dieses zweite Ende des Zugmittels 9 wird von einem Seilabschnitt 11 ausgebildet, der mit dem Kettenabschnitt 8 an einer Verbindungsstelle 12 zugfest verbunden ist und der über eine im Bereich der Rückwand 3 angeordnete Umlenkrolle 13 des Zugmitteltriebs geführt ist. In der in den Fig. 1 bis 3 dargestellten Stellung der Stirnwand 2 ist die Verbindungsstelle 12 in der Nähe der Umlenkrolle 13 positioniert. Bei einer vollständig in Richtung der Rückwand 3 verschobenen Stirnwand 2 ist die Verbindungsstelle 12 dagegen (weiterhin in demselben Trum des Zugmittelstriebs) in der Nähe des Umlenkzahnrads positioniert. Demnach ist unabhängig von der Stellung der verschiebbaren Stirnwand 2 immer der Kettenabschnitt 8 über das Umlenkzahnrad und der Seilabschnitt 11 über die Umlenkrolle 12 geführt.

Zwischen das mit dem Antriebsschlitten 10 verbundene Ende des Kettenabschnitts 8 und den Antriebsschlitten 10 ist eine Spannvorrichtung 14 integriert. Diese umfasst eine Schraubenfeder 15, die vorgespannt zwischen dem Antriebsschlitten 10 und einem mit dem Ende des Kettenabschnitts 8 verbundenen Anschlagelement 16 abgestützt ist und dadurch das Zugmittel 9 auf Zug vorgespannt hält.

Der Zugmitteltrieb ist, mit Ausnahme des gerade über das Umlenkzahnrad geführten Abschnitts des Zugmittels 9, innerhalb eines von dem Boden 1 ausgebildeten Kanals 17 angeordnet. Gleiches gilt für den der Verbindung mit den Enden des Zugmittels 9 dienenden Abschnitt des Antriebsschlittens 10. Der Kanal 17 erstreckt sich in den Laderaum, d.h. dieser ist, bezogen auf eine Hauptfläche 18 des Bodens, nach oben abgesetzt ausgebildet, wodurch die Integration des Zugmitteltriebs die Höhe des Laderaums nur lokal, d.h. im Bereich des mittig (bezüglich der Querrichtung) in Längsrichtung verlaufenden Kanals 17 beschränkt. Zudem dient der Kanal 17 auch der seitlichen Führung der Verschiebebewegung der Stirnwand 2, wozu der Kanal 17 in eine Schlitzöffnung der Stirnwand 2, die von der dem Boden 1 benachbarten Kante der Stirnwand 2 ausgeht, eingreift beziehungsweise gerührt ist.

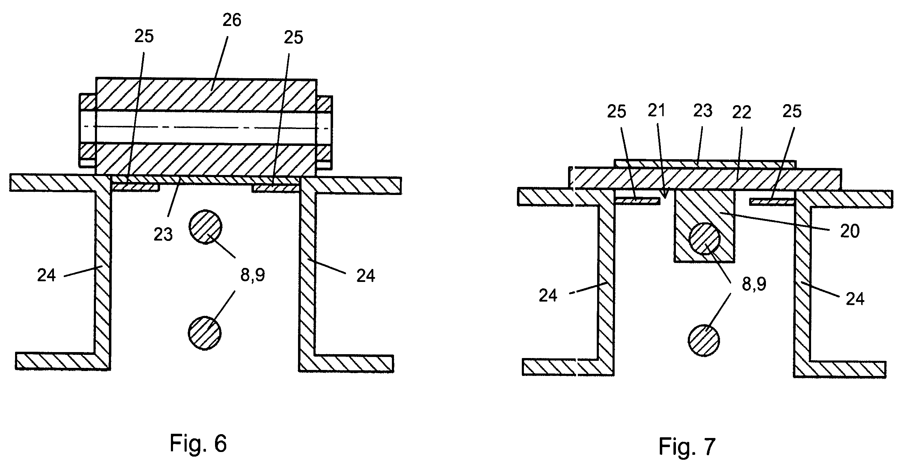

Der Antriebsschlitten 10 ist fest mit Längsträgern 19 eines Rollgestells der verschiebbaren Stirnwand 2 verbunden. Dazu erstrecken sich die der Verbindung mit den Enden des Zugmittels dienenden Vertikalteile 20 des Antriebsschlittens 10 durch eine in der Oberseite des Kanals 17 ausgebildete, sich in Längsrichtung des Laderaumaufbaus erstreckende Führungsöffnung 21. Diese Vertikalteile 20 sind mit gleitend auf dem Kanal 17 aufliegenden Querteilen 22 des Antriebsschlittens 10 verbunden, die wiederum mit den Längsträgern 19 des Rollgestells verbunden sind (in der Fig. 7 nicht dargestellt). Eine Bewegung des Zugmittels 9 mittels des Antriebsmotors 6 wird folglich über den Antriebsschlitten 10 auf die Stirnwand 2 übertragen, wodurch diese entsprechend verschoben wird.

In Abhängigkeit von der jeweiligen Stellung der Stirnwand 2 befindet sich ein mehr oder weniger langer Abschnitt des Kanals 17 innerhalb des Laderaums und ist dadurch der darin gelagerten Ladung ausgesetzt. Um zu vermeiden, dass Ladung in die Führungsöffnung 21 eindringt, ist diese mittels einer Abdeckung 23 verschlossen. Dazu liegt die Abdeckung 23 auf dem von der Oberseite des Kanals 17 ausgebildeten Abschnitt des Bodens 1 auf Dabei ist die Integration der Abdeckung 23 in die Oberseite des Kanals 17 im Wesentlichen bündig ausgeführt. Dies wird dadurch realisiert, dass der nach unten offene Kanal 17 von zwei den Kanalinnenraum seitlich begrenzenden Längsträgern 24 sowie von zwei an den Längsträgern 24 (um das Maß der Dicke der Abdeckung 23) nach unten versetzt befestigten, den Kanalinnenraum nach oben begrenzenden Auflageträgern 25 ausgebildet ist (vgl. Fig. 6).

Im Bereich der Stirnwand 2 ist die Abdeckung 23 oberhalb des Antriebsschlittens 10 geführt, wodurch diese wegen der auf der Oberseite des Kanals 17 aufliegenden, mit den Längsträgern 19 des Rollgestells verbundenen Querteilen 22 lokal von dem Kanal 17 abgehoben ist. Dies erfolgt jedoch stets unterhalb der (von unten nach oben gesehen) schräg nach vorne gekippt ausgerichteten Stirnwand 2 und somit außerhalb des Laderaums, so dass kein Eindringen von Ladung durch die seitlich zwischen der Oberseite des Kanals 17 und der Unterseite der Abdeckung 23 ausgebildeten Spalte zu erwarten ist.

Das lokale Abheben der Abdeckung 23 durch einen Kontakt mit den Querteilen 22 des Antriebsschlittens 10 wird durch eine entsprechende elastische Deformierbarkeit der Abdeckung 23 erreicht. Dazu ist diese aus einem ausreichend dünnen und damit leicht elastisch deformierbaren Stahlblech ausgebildet.

Um sicherzustellen, dass das Abheben der Abdeckung 23 auf den Bereich unterhalb des Rollgestells der Stirnwand 2 beschränkt bleibt, wälzen zwei an den längsaxialen Enden des Rollgestells angeordnete Rollen 26 nicht nur auf den Längsträgern 24 des Kanals 17 sondern auch auf den entsprechenden Abschnitten der Abdeckung 23 ab, wodurch die Abdeckung 23 von den Rollen 26 auf die Oberseite des Kanals 17 gedrückt wird.

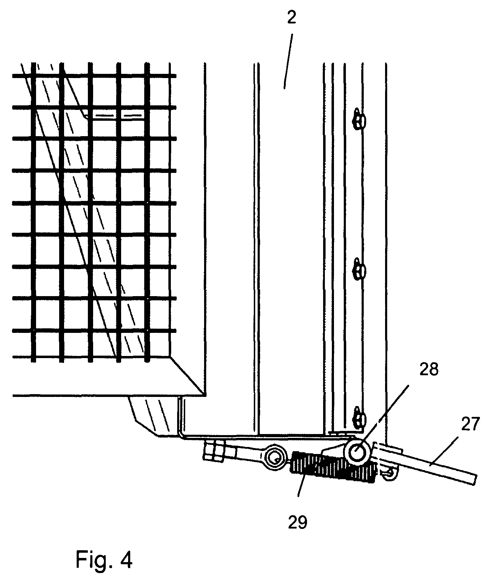

Um zu vermeiden, dass Ladung, insbesondere beim Verschieben der Stirnwand 2, in die zwischen der Stirnwand 2 einerseits und den Seitenwänden 5 sowie dem Boden 1 andererseits ausgebildeten Spalte eindringt, sind diese von leistenförmigen Dichtelementen 27 abdeckt. Die Dichtelemente 27 sind, wie dies in der Fig. 4 dargestellt ist, drehbar um eine Achse 28, die sich in Längsrichtung des jeweils abzudichtenden Spalts erstreckt, drehbar an der Stirnwand 2 befestigt und mit ihren Dichtkanten mittels vorgespannter Federelemente 29 gegen die jeweilige Seitenwand 5 oder den Boden 1 beaufschlagt. Diese federbeaufschlagte, drehbare Lagerung der Dichtelemente 27 dient nicht nur dazu, eine verschleißbedingte Verkürzung der Dichtelemente 27 zu kompensieren, sondern insbesondere auch eine sich ändernde Breite des Laderaums auszugleichen. Die Seitenwände 5 gehen nämlich kontinuierlich von einer parallelen Ausrichtung im Bereich des vorderen Endes des Laderaumaufbaus in eine zunehmend trapezförmige Ausrichtung im Bereich des hinteren, die Entladeöffnung ausbildenden Endes des Laderaumaufbaus über, wobei die Breite zwischen den oberen Kanten der Seitenwände 5 im Vergleich zu der Breite zwischen den unteren Kanten der Seitenwände 5 größer wird. Das Aufweiten des Laderaums in Richtung des hinteren Endes sorgt durch ein Ablösen der Ladung von den Seitenwänden beim Abschieben und dadurch für eine relativ geringe erforderliche Abschiebeleistung.

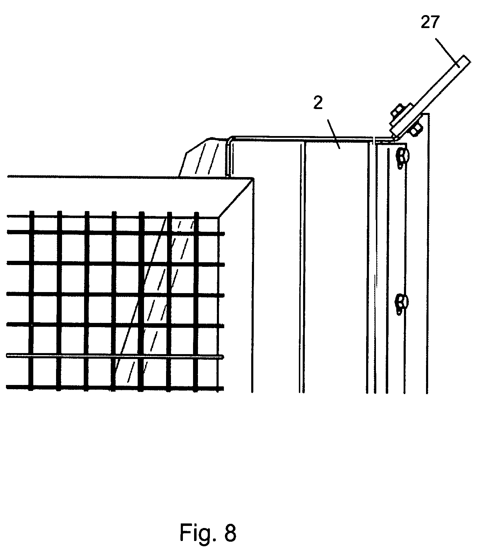

Die Fig. 8 zeigt eine alternative Ausgestaltung für die Abdichtung der zwischen der Stirnwand 2 einerseits und den Seitenwänden 5 sowie dem Boden 1 andererseits ausgebildeten Spalte. Bei dieser Ausgestaltung sind die Dichtelemente 27 feststehend ausgebildet. Ein Aufweiten des Laderaums über der Länge des Laderaumaufbaus können diese somit lediglich über eine unterschiedliche stark erfolgende Deformation der Dichtelemente 27 selbst kompensieren.

### Bezugszeichenliste:

- 1.: Boden
- 2.: Stirnwand
- 3.: Rückwand
- 4.: Drehgelenk
- 5.: Seitenwand
- 6.: Antriebsmotor
- 7.: Abtriebswelle
- 8.: Kettenabschnitt
- 9.: Zugmittel
- 10.: Antriebsschlitten
- 11.: Seilabschnitt
- 12.: Verbindungsstelle
- 13.: Umlenkrolle
- 14.: Spannvorrichtung
- 15.: Schraubenfeder
- 16.: Anschlagelement
- 17.: Kanal
- 18.: Hauptfläche des Bodens
- 19.: Längsträger des Rollgestells
- 20.: Vertikalteil des Antriebsschlittens
- 21.: Führungsöffnung
- 22.: Querteil des Antriebsschlittens
- 23.: Abdeckung
- 24.: Längsträger des Kanals
- 25.: Auflageträger
- 26.: Rolle
- 27.: Dichtelement
- 28.: Achse
- 29.: Federelement

## Patentansprüche

1. Laderaumaufbau mit einem Boden (1) und einer entlang des Bodens (1) verschiebbaren Wand, wobei unterhalb der der Wand zugewandten Oberfläche des Bodens (1) ein Antriebsschlitten (10) angeordnet ist, der über eine in dem Boden ausgebildete Führungsöffnung (21) mit der Wand verbunden ist, **dadurch gekennzeichnet, dass** die Führungsöffnung (21) mittels einer auf dem Boden (1) aufliegenden, elastisch deformierbaren Abdeckung (23) verdeckt ist, wobei die Abdeckung (23) im Bereich des Antriebsschlittens (10) unter elastischer Deformation von dem Boden (1) abgehoben ist.

2. Laderaumaufbau gemäß Anspruch 1, **dadurch gekennzeichnet, dass** die Abdeckung (23) aus Stahlblech ausgebildet ist.

3. Laderaumaufbau gemäß Anspruch 1 oder 2, **dadurch gekennzeichnet, dass** die Abdeckung (23) infolge eines Kontakts mit dem Antriebsschlitten (10) von dem Boden (1) abgehoben ist.

4. Laderaumaufbau gemäß einem der vorhergehenden Ansprüche, **dadurch gekennzeichnet, dass** der Antriebsschlitten (10) außerhalb der Bodenfläche des von der Wand begrenzten Laderaums angeordnet ist.

5. Laderaumaufbau gemäß einem der vorhergehenden Ansprüche, **dadurch gekennzeichnet, dass** der Antriebsschlitten (10) in einen Zugmitteltrieb integriert ist.

6. Laderaumaufbau gemäß Anspruch 4, **dadurch gekennzeichnet, dass** der Antriebsschlitten (10) mit zwei Enden eines Zugmittels (9) des Zugmitteltriebs verbunden ist und zwischen dem Antriebsschlitten (10) und zumindest einem der Enden eine Spannvorrichtung (14) für das Zugmittel (9) angeordnet ist.

7. Laderaumaufbau gemäß Anspruch 5 oder 6, **dadurch gekennzeichnet, dass** der Zugmitteltrieb einen statisch in den Laderaumaufbau integrierten Antriebsmotor (6) umfasst.

8. Laderaumaufbau gemäß Anspruch 7, **dadurch gekennzeichnet, dass** der Zugmitteltrieb einen mit dem Antriebsmotor (6) zusammenwirkenden Kettenabschnitt (8) sowie einen Seilabschnitt (11) aufweist.

9. Laderaumaufbau gemäß Anspruch 8, **dadurch gekennzeichnet, dass** der Kettenabschnitt (8) über ein Umlenkzahnrad des Zugmitteltriebs und der Seilabschnitt (11) über eine Umlenkrolle (13) des Zugmitteltriebs geführt ist.

10. Laderaunaufbau gemäß einem der vorhergehenden Ansprüche, **dadurch gekennzeichnet, dass** der Antriebsschlitten (10) innerhalb eines von dem Boden (1) ausgebildeten, sich in den Laderaum erstreckenden Kanals (17) angeordnet ist.

11. Laderaumaufbau gemäß Anspruch 10, **dadurch gekennzeichnet, dass** der Kanal (17) in eine Schlitzöffnung der Wand eingreift.

12. Laderaumaufbau gemäß einem der vorhergehenden Ansprüche, **dadurch gekennzeichnet, dass** die Wand in Bewegungsrichtung beabstandet von dem Antriebsschlitten (10) mittels einer Rolle (26) auf der Abdeckung (23) abrollt.

13. Laderaumaufbau gemäß Anspruch 12, **dadurch gekennzeichnet, dass** die Rolle (26) zwischen dem Antriebsschlitten (10) und dem von der Wand begrenzten Laderaum angeordnet ist.

14. Fahrzeug mit einem Fahrgestell und einem auf dem Fahrgestell angeordneten Laderaumaufbau gemäß einem der vorhergehenden Ansprüche.

## Claims

1. Cargo bay construction with a floor (1) and a slideable wall along the floor (1), whereby below the wall facing surfaces of the floor (1) a drive slide (10) is arranged that over a developed guide opening (21) in the floor is connected with the back wall, **characterized in that** the guide opening (21) is covered by means of an elastic deformable cover (23) overlying the floor (1), whereby the cover (23) in the area of the drive slide (10) under elastic deformation is lifted from the floor (1).

2. Cargo bay construction according to claim 1, **characterized in that** the cover (23) is developed from sheet steel.

3. Cargo bay construction according to claim 1 or 2, **characterized in that** the cover (23) as a result of contact with the drive slide (10), is lifted from the floor (1).

4. Cargo bay construction according to one of the previous claims, **characterized in that** the drive slide (10) is arranged outside of the floor surface by the cargo bay, which is limited by the wall.

5. Cargo bay construction according to previous claims, **characterized in that** the drive slide (10) is integrated into a drive mechanism.

6. Cargo bay construction according to claim 4, **characterized in that** the drive slide (10) is connected with two ends of a mechanism (9) of the drive mechanism and between the drive slide (10) and is at least one of the ends is given a tension guide (14) for the mechanism (9).

7. Cargo bay construction according to claim 5 or 6, **characterized in that** the drive mechanism encompasses an integrated drive motor (6) which is statically integrated into the cargo bay construction.

8. Cargo bay construction according to claim 7, **characterized in that** the drive mechanism exhibits a chain section (8) that works together with the drive motor (6) as well as a cable section (11).

9. Cargo bay construction according to claim 8, **characterized in** hat the chain section (8) is guided by a diverting gear of the drive mechanism and the cable section (11) is guided over a diverting roller (13) of the drive mechanism.

10. Cargo bay construction according to previous claims, **characterized in that** the drive slide (10) is arranged within the channel (17) spanning the cargo bay that is developed within the floor (1).

11. Cargo bay construction according to claim 10, **characterized in that** channel (17) intervenes in a slot opening of the wall.

12. Cargo bay construction according to previous claims, **characterized in that** the wall spaced in the direction of movement from the drive slide (10) by means of a roller (26) rolls off onto the cover.

13. Cargo bay construction according to claim 12, **characterized in that** the roller (26) is arranged between the drive slide (10) and the cargo bay limited by the wall.

14. Vehicles with a carriage and a cargo bay construction arranged on the carriage according to one of the previous claims.

## Revendications

1. Structure d'espace de chargement comprenant un fond (1) et une paroi pouvant coulisser le long du fond (1), où un chariot d'entraînement (10) est disposé au-dessous de la surface du fond (1), tournée vers la paroi, chariot d'entraînement qui est relié à la paroi par une ouverture de guidage (21) formée dans le fond,
**caractérisée en ce que** l'ouverture de guidage (21) est masquée au moyen d'une partie couvrante (23) élastiquement déformable et s'appliquant sur le fond (1), où la partie couvrante (23) est soulevée du fond (1), dans la zone du chariot d'entraînement (10), sous l'effet d'une déformation élastique.

2. Structure d'espace de chargement selon la revendication 1, **caractérisée en ce que** la partie couvrante (23) est formée par une tôle d'acier.

3. Structure d'espace de chargement selon la revendication 1 ou 2, **caractérisée en ce que** la partie couvrante (23) est soulevée du fond (1) suite à un contact avec le chariot d'entraînement (10).

4. Structure d'espace de chargement selon l'une quelconque des revendications précédentes, **caractérisée en ce que** le chariot d'entraînement (10) est disposé à l'extérieur de la surface du fond de l'espace de chargement délimité par la paroi.

5. Structure d'espace de chargement selon l'une quelconque des revendications précédentes, **caractérisée en ce que** le chariot d'entraînement (10) est intégré dans une commande d'un mécanisme de traction.

6. Structure d'espace de chargement selon la revendication 4, **caractérisée en ce que** le chariot d'entraînement (10) est relié à deux extrémités d'un mécanisme de traction (9) de la commande de mécanisme de traction, et un dispositif de serrage (14) prévu pour le mécanisme de traction (9) est disposé entre le chariot d'entraînement (10) et au moins l'une des extrémités.

7. Structure d'espace de chargement selon la revendication 5 ou 6, **caractérisée en ce que** la commande du mécanisme de traction comprend un moteur d'entraînement (6) intégré en étant statique dans la structure d'espace de chargement.

8. Structure d'espace de chargement selon la revendication 7, **caractérisée en ce que** la commande du mécanisme de traction présente une partie chaîne (8) ainsi qu'une partie câble (11) fonctionnant de façon conjointe avec le moteur d'entraînement (6).

9. Structure d'espace de chargement selon la revendication 8, **caractérisée en ce que** la partie chaîne (8) est guidée par une roue dentée de renvoi de la commande du mécanisme de traction, la partie câble (11) étant guidée par une poulie de renvoi (13) de la commande du mécanisme de traction.

10. Structure d'espace de chargement selon l'une quelconque des revendications précédentes, **caractérisée en ce que** le chariot d'entraînement (10) est disposé à l'intérieur d'un canal (17) formé par le fond (1) et s'étendant dans l'espace de chargement.

11. Structure d'espace de chargement selon la revendication 10, **caractérisée en ce que** le canal (17) pénètre dans une ouverture de la paroi, en forme de fente.

12. Structure d'espace de chargement selon l'une quelconque des revendications précédentes, **caractérisée en ce que** la paroi se déploie sur la partie couvrante (23) au moyen d'un rouleau (26), en étant à distance du chariot d'entraînement (10) dans une direction de mouvement.

13. Structure d'espace de chargement selon la revendication 12, **caractérisée en ce que** le rouleau (26) est disposé entre le chariot d'entraînement (10) et l'espace de chargement délimité par la paroi.

14. Véhicule comprenant un châssis et une structure d'espace de chargement disposée sur le châssis selon l'une quelconque des revendications précédentes.
